# EUROPEAN PATENT APPLICATION

(11) **EP 4 560 226 A1**
(43) Date of publication of application: **28.05.2025**
(21) Application number: 23850298.3
(22) Date of filing: 18.07.2023
(51) Int. Cl.: F25C 1/08, G06F 8/61

(54) **ICE-MAKING CONTROL METHOD**

(30) Priority: 03.08.2022 KR 20220096642
(71) Applicant: Won Bong Co., Ltd., Gimpo-si, Gyeonggi-do 10053 (KR)
(72) Inventor: KIM, Eun Su, Gimpo-si Gyeonggi-do 10121 (KR); AHN, Jun Sang, Seoul 05501 (KR); KANG, Eun Hye, Seoul 07803 (KR)
(74) Representative: Sander, Rolf
(86) International application number: PCT/KR2023/010284
(87) International publication number: WO 2024/029791

(57) **Abstract**

The present invention relates to an ice-making control method. An ice-making control method according to an embodiment of the present invention comprises the steps of: flowing refrigerant in an evaporator having multiple ice-making fingers spaced apart from each other in the longitudinal direction to start ice-making at the ice-making fingers; obtaining temperature information at the end portion of the evaporator at a first extension determination time point after the starting of ice making; determining whether to extend a set ice-making time on the basis of the temperature information at the end portion; and when it is determined to extend the ice-making time, extending the ice-making time by a first extension time and making ice for the extended ice-making time. Therefore, the present invention can provide uniform-sized ice even when there is a significant difference in cooling time between the start and end portions of the evaporator.

## Description

### TECHNICAL FIELD

The present disclosure relates to an ice-making control method, and more specifically, to an ice-making control method capable of producing a uniformly sized ice even when there is a large difference in the time it takes for the ice-making finger at the starting part of the evaporator to cool to the set temperature compared to the time it takes for the ice-making finger at the terminal part of an evaporator to cool to the set temperature, by extending the ice-making time to ensure that ice produced from ice-making fingers at the terminal part can grow to a sufficient size if the terminal part temperature of the evaporator is detected to be higher than a reference temperature at a predetermined time point after the start of ice-making.

### BACKGROUND

Recently, due to rapid industrial development, environmental pollution has become more serious, and especially, water pollution has reached a serious level, so most places such as homes and public offices purify water for drinking.

In this way, water purifiers that purify raw water supplied through water pipes and then supply cold and hot water are widely used as devices that purify water for drinking, and recently, purifiers with ice that can separately supply ice have also been rapidly popularized for reasons such as convenience of use.

A purifier with ice has an ice maker that can form ice in an internal space, and the ice maker is composed of a cooling module that circulates refrigerant along a refrigeration cycle and an ice tank that forms ice through heat exchange of the cooling module and stores it. The ice stored in the ice tank is discharged through a separate ice discharge port and supplied to the user.

In general, an ice tank includes an ice-making tank where water is stored, and an evaporator where refrigerant circulates to facilitate heat exchange for creating ice using the water stored in the ice-making tank.

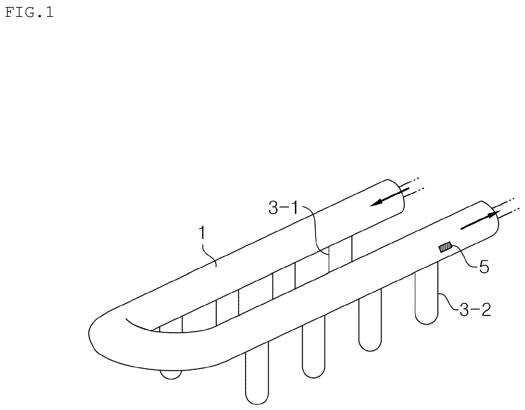

FIG. 1 is a drawing illustrating an example of an evaporator. Referring to FIG. 1, the evaporator (1) is formed to a predetermined length and is bent at the middle section to form a 'U' shape to enhance space efficiency. In addition, the evaporator (1) is equipped with multiple ice-making fingers (3) arranged at intervals along the length of the evaporator (1). When the ice-making fingers (3) are immersed in the water of the ice-making tank and the refrigerant flows in the evaporator (1), the water that comes into contact with the ice-making fingers (3) is cooled to form ice, and once the preset ice-making time is completed, the refrigerant flow in the evaporator (1) ends.

At this time, the ice-making time is the time required for the refrigerant in the evaporator (1) to flow and form ice of the target size, and is a preset time depending on the temperature of the water in the ice-making tank or the temperature around the evaporator.

Once this ice-making process is completed, an ice detachment process is performed to separate the ice formed on the ice-making finger (3) from the ice-making finger (3), and specifically, the ice detachment is performed by flowing a high-temperature gas through the evaporator (1) where the refrigerant flow has ended or by operating a heating wire, which is separately provided in the evaporator (1), to heat the ice-making finger (3). At this time, a temperature sensor (5) that detects the terminal part temperature of the evaporator (1) is arranged at the end of the evaporator (1), and based on the temperature information detected by the temperature sensor (5), it is possible to determine whether the ice detachment has been performed or whether an error has occurred in the ice detachment process.

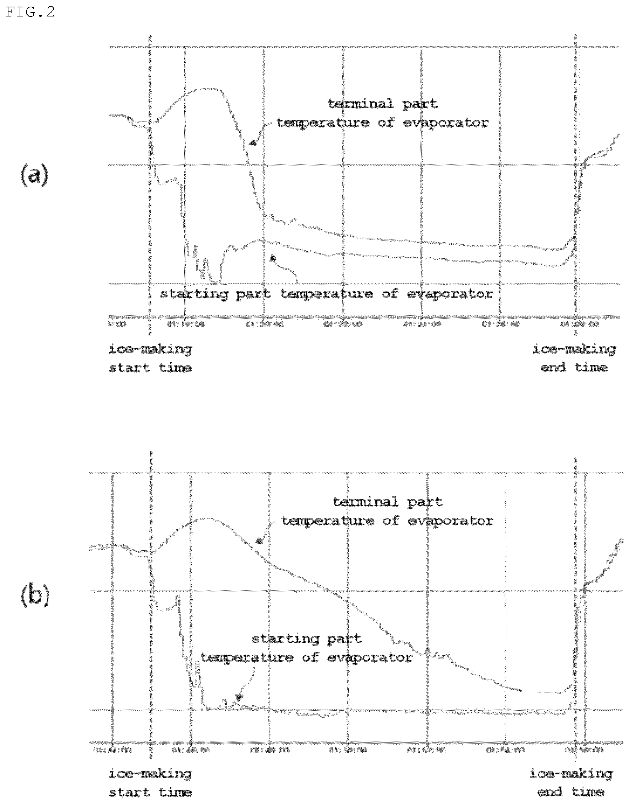

However, since multiple ice-making fingers are spaced along the length of the evaporator (1), there is a difference in the time it takes for the ice-making finger (3-1) at the starting part of the evaporator to cool to the set temperature, compared to the time it takes for the ice-making finger (3-2) at the terminal part to cool to the set temperature. When this cooling time difference between the starting part and terminal part is not large, as shown in FIG. 2a, almost the same size of ice is formed on both the ice-making finger (3-1) at the starting part and the ice-making finger (3-2) at the terminal part.

However, due to differences in ice-making conditions (e.g., differences in installation environment, component deviations, manufacturing deviations, etc.), a large cooling time difference may occur between the ice-making fingers at the starting part and terminal part in some evaporators. In this case, as shown in FIG. 2b, the time during which the ice-making finger (3-2) at the terminal part is maintained at the set cooling temperature is greatly reduced, so that the ice generated on the ice-making finger (3-2) at the terminal part does not grow sufficiently within the ice-making time, and thus, there is a problem that ice of different sizes is generated at the starting part and the terminal part.

### SUMMARY

### Technical Problem

The present disclosure is intended to solve the problems of the prior art mentioned above, and the purpose of the present disclosure is to provide an ice-making control method that extends the ice-making time if the terminal part temperature of the evaporator measured at a predetermined point in time after the start of ice-making, is higher than the reference temperature, thereby guaranteeing a time for ice formed on the ice-making finger at the terminal part to grow to a sufficient size.

Another purpose of the present disclosure is to provide an ice-making control method that can deliver uniform ice by only changing the control method by utilizing existing parts of the conventional ice maker without adding any additional components.

### Solution to Problem

According to an embodiment of the present disclosure, an ice-making control method includes: initiating ice-making on a plurality of ice-making fingers by flowing refrigerant in an evaporator which has the plurality of ice-making fingers spaced apart in a longitudinal direction; after the initiating of the ice-making, acquiring terminal part temperature information of the evaporator at a first extension determination point; determining whether to extend a set ice-making time based on the terminal part temperature information; and when it is determined to extend the ice-making time, extending the ice-making time by a first extension time and making ice during the extended ice-making time.

At this time, in the ice-making control method, whether to extend the ice-making time based on whether the terminal part temperature information measured at the first extension determination point is equal to or higher than a reference temperature may be determined.

Additionally, the ice-making control method may further comprise setting the first extension determination point based on the ice-making time.

In addition, the setting the first extension determination point may comprise: determining an ice-making guarantee time required to produce target sized ice; and setting the first extension determination point to time before the ice-making guarantee time from an end time of the ice-making time.

Additionally, the ice-making control method may further comprise, when extending the ice-making time, determining whether to extend the extended ice-making time based on the terminal part temperature acquired at a second extension determination point, and, when it is determined to extend the extended ice-making time, the extended ice-making time may be extended by a second extension time.

In addition, the ice-making control method may further comprise determining whether the evaporator is abnormal based on a number of determined extensions of the ice-making time or total extended time.

### Advantageous Effects of Invention

According to the present disclosure, if the temperature at the terminal part of the evaporator is detected to be higher than the reference temperature at a predetermined point in time after the start of ice making, the ice making time is extended to ensure that the ice formed on the ice making finger at the terminal part can grow to a sufficient size, thereby providing ice of a uniform size even when the cooling time difference between the starting part and the terminal part of the evaporator is large.

In addition, since the present disclosure can provide uniform ice only by changing the control method by utilizing existing parts without adding components to the configuration of an existing ice maker, the cost can be reduced, and the ice making control method according to the present disclosure can be applied to an existing ice maker, which has already been manufactured, through a software update.

### BRIEF DESCRIPTION OF THE DRAWINGS

FIG. 1 is a schematic diagram of a conventional evaporator.
FIG. 2a and FIG. 2b are graphs showing the cooling time difference between the starting part and the terminal part of a conventional evaporator.
FIG. 3 is a functional block diagram of an ice-making control system to which an ice-making control method according to an embodiment of the present disclosure is applied.
FIG. 4 is a flowchart illustrating an ice-making control method according to an embodiment of the present disclosure.
FIG. 5 is a diagram illustrating an example of extending an ice-making time according to an embodiment of the present disclosure.
FIG. 6 is a functional block diagram of an extension control unit according to an embodiment of the present disclosure.
FIG. 7 is a flowchart illustrating a process of determining whether to extend an ice-making time according to an embodiment of the present disclosure in more detail.
FIG. 8 is a diagram illustrating an example of extending an ice-making time multiple times according to an embodiment of the present disclosure.
FIG. 9 is a flowchart illustrating a process of setting a first extension determination point according to an embodiment of the present disclosure.
FIG. 10 is a drawing illustrating an example in which an ice-making time is guaranteed at a terminal part according to an extension of the ice-making time according to an embodiment of the present disclosure.

### DETAILED DESCRIPTION OF EMBODIMENTS

The technical terms used in the present disclosure are employed solely for the purpose of describing specific embodiments and are not intended to limit the disclosure. Moreover, unless otherwise specifically defined in the present disclosure, the technical terms used should be interpreted according to their commonly understood meanings by those skilled in the art to which the disclosure pertains, and should not be interpreted in an excessively broad or overly narrow sense. If the technical terms used in the present disclosure do not accurately express the concepts of the disclosure, they should be replaced with the correct technical terms that can be properly understood by those skilled in the art.

Additionally, singular expressions used in the present disclosure include plural expressions unless the context clearly indicates otherwise. In the present disclosure, terms such as "composed of" or "includes" should not be interpreted as necessarily encompassing all of the components or steps described in the disclosure. Some components or steps may be omitted, or additional components or steps may be included.

In addition, it should be noted that the attached drawings are only intended to facilitate easy understanding of the idea of the present disclosure, and should not be construed as limiting the idea of the present disclosure by the attached drawings.

Hereinafter, the ice-making control method according to the present disclosure will be examined in more detail with reference to the attached drawings.

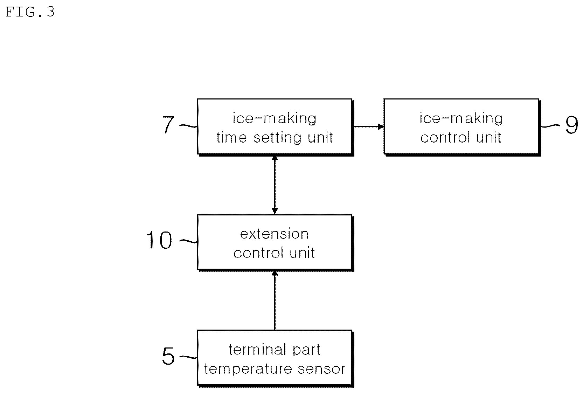

FIG. 3 is a functional block diagram of an ice-making control system to which the ice-making control method according to one embodiment of the present disclosure is applied.

The ice-making control system to which the ice-making control method according to one embodiment of the present disclosure is applied may have, as shown in FIG. 3, an ice-making time setting unit (7) for setting an ice-making time, an ice-making control unit (9) for controlling the operation of an ice maker during the ice-making time, and an extension control unit (10) for determining the extension of the ice-making time.

The ice-making time setting unit (7) may obtain information on the temperature of water in the ice-making tank or the temperature around the evaporator, and set the ice-making time based on the obtained information on the temperature of water or the temperature around the evaporator. In this case, the ice-making time setting unit may determine the ice-making time based on a pre-stored ice-making time table for each temperature (of water or around the evaporator). In addition, the ice-making time set by the ice-making time setting unit (7) may include information on the ice-making start time and information on the ice-making end time. Once the ice-making time is set by the ice-making time setting unit (7), the ice-making control unit (9) may control the operation of the ice maker so that the refrigerant flows through the evaporator during the set ice-making time.

The extension control unit (10) can obtain terminal part temperature detected at the terminal part of the refrigerant flow direction in the evaporator at a predetermined time point following the start of ice-making, and can determine whether to extend the ice making time based on the obtained terminal part temperature. In addition, if the extension control unit (10) determines to extend the ice making time, it can provide the extension information to the ice making time setting unit (7). The ice making time setting unit (7) that has received the extension information can reset the ice making time by applying the extension information.

At this time, the extension control unit (10) can obtain terminal part temperature information from a terminal part temperature sensor (5) installed at the terminal part of the evaporator. The terminal part temperature sensor (5) may be an existing temperature sensor already installed in conventional ice makers for determining whether ice is removed or determining an ice removing error. In this way, the present disclosure can provide uniform ice by only changing the control method without adding any new components, utilizing the existing parts of the conventional ice maker, so that the cost can be reduced, and the ice-making control method according to the present disclosure can be applied to existing ice makers that have already been manufactured through software updates.

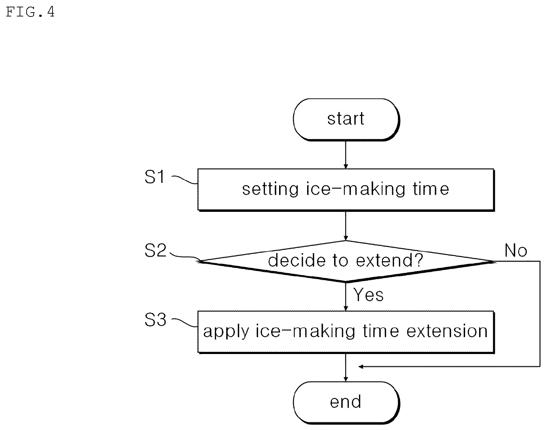

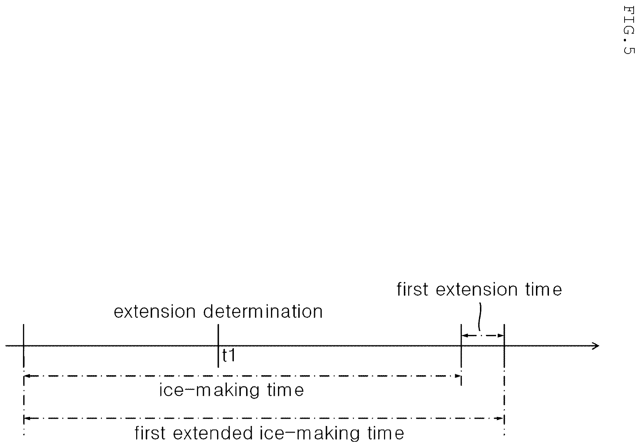

FIG. 4 is a flow chart illustrating an ice-making control method according to one embodiment of the present disclosure, and FIG. 5 is a drawing illustrating an example of extending an ice-making time according to an embodiment of the present disclosure.

Looking at the ice-making control method according to the present embodiment with reference to FIG. 4, the ice-making time setting unit (7) can set the ice-making time based on the temperature of the water in the ice-making tank or the temperature around the evaporator (S1).

Once the ice-making time is set, the ice-making control unit (9) controls the operation of the ice maker to start ice-making, and the extension control unit (10) can determine whether to extend the ice-making time based on the terminal part temperature information acquired at the first extension determination point (t1) after ice-making has started, as illustrated in FIG. 5 (S2).

If it is determined that the ice-making time is to be extended (S2-Y), the extension control unit (10) can generate extension information and provide it to the ice-making time setting unit (7) so that the ice-making time is extended by a first extension time from the initially set ice-making time (S3). Here, the first extension time can be variable in proportion to the ice-making time or can be a fixed time.

Meanwhile, if the extension control unit (10) determines not to extend the ice-making time (S2-N), the ice-making control unit (9) can operate the ice maker according to the initially set ice-making time without a separate ice-making time extension.

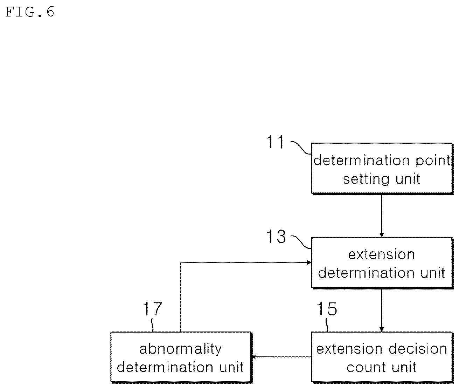

FIG. 6 is a functional block diagram of an extension control unit according to one embodiment of the present disclosure.

Hereinafter, the extension control unit (10) according to the present embodiment will be described in more detail with reference to FIG. 6.

As shown in the drawing, the extension control unit (10) may be equipped with a determination point setting unit (11) that sets a first extension determination point in time, and an extension determination unit (13) that determines whether or not to extend the ice-making time.

The determination point setting unit (11) may set the first extension determination point in time based on the ice-making time set by the ice-making time setting unit (7). Preferably, the determination point setting unit (11) may determine the first extension determination point as a moment when a reference percentage of the ice-making time set by the ice-making time setting unit (7) has elapsed. For example, the determination point setting unit (11) can determine the point in time when 40% of the ice-making time has elapsed as the first extension determination point, and in this case, if the ice-making time setting unit (7) sets the ice-making time to 15 minutes, the first extension determination point can be determined as the moment 6 minutes after the start of ice-making.

When the first extension determination point set by the determination point setting unit (11) arrives, the extension determination unit (13) can obtain the first terminal part temperature information by requesting the terminal part temperature sensor (5). At this time, the first terminal part temperature obtained from the extension determination unit (13) may be the temperature of the terminal part of the evaporator measured at the first extension determination point in time.

The extension determination unit (13) can determine whether to extend the ice-making time based on the obtained first information about terminal part temperature. Specifically, the extension determination unit (13) may determine whether the acquired first terminal part temperature is equal to or higher than the reference temperature, and if the first terminal part temperature is equal to or higher than the reference temperature, the ice-making time may be extended. On the other hand, if the first terminal part temperature is lower than the reference temperature, the extension determination unit (13) may determine not to extend the ice-making time. Here, the reference temperature that serves as the judgment criterion for the ice-making time extension may be a temperature fixed to a specific temperature below 0°C.

Meanwhile, if the extension determination unit (13) determines that the ice-making time should be extended, the ice-making time setting unit (7) can reset the ice-making time by adding the first extension time to the preset ice-making time. Preferably, the ice-making time setting unit (7) does not change the ice-making start time included in the preset ice-making time information, but can postpone the ice-making end time information by the first extension time and set it accordingly. Hereinafter, for the convenience of explanation, the time extended by adding the first extension time to the ice-making time will be referred to as the 'first extended ice-making time'.

In this way, if the terminal part temperature is detected to be higher than the reference temperature at the first extension determination point after the start of ice-making, the present disclosure can extend the ice-making time by the first extension time to generate sufficient sized ice even if the ice-making finger of the terminal part of the evaporator is cooled relatively late. Therefore, the present disclosure can provide equal sized ice even when the cooling time difference between the starting part of the evaporator and the terminal part of the evaporator is large.

In addition, even if the ice making time is extended, if the ice size generated on the ice making finger exceeds a certain size, the distance between the ice making finger and the outer surface of the ice increases, limiting the heat exchange between the ice making finger and the water. Accordingly, the ice generated on the ice making finger rapidly decreases in size growth rate when it reaches a certain size. That is, even if the ice making time is extended, the ice generated on the ice making finger at the starting part of the evaporator has already reached a certain size during the initially set ice making time, so the size growth during the extended time is minimal, and the ice formed on the ice-making finger at the terminal end of the evaporator, which did not reach a certain size during the initially set ice-making time, grows rapidly to the desired size during the extended ice-making time, so that when the ice making time is extended, uniform-sized ice can be generated between the ice-making fingers at the starting part and the ice-making fingers at the terminal part of the evaporator.

Preferably, the extension determination unit (13), which has determined that the ice making time should be extended, can assess whether further extension is needed after a predetermined period. Specifically, if the extension determination unit (13) determined to extend the ice-making time at the first extension determination point in time, when the second extension determination point, which is after the first determination waiting time from the first extension determination point, arrives, the second terminal part temperature can be requested and acquired from the terminal part temperature sensor (5). At this time, the second terminal part temperature information which is additionally provided to the extension determination unit (13) may be temperature measured at the second extension determination point. The extension determination unit (13) can determine whether to extend the first extended ice-making time based on the acquired second terminal part temperature, and if the extension determination unit (13) determines that the first extended ice-making time is extended at the second extension determination point, the ice-making time setting unit (7) can reset the first extended ice-making time by adding the second extension time to the first extended ice-making time. In addition, the extension determination unit (13) that has determined to extend the first extended ice-making time can determine whether to extend it again when the third extension determination time, which is after the second determination waiting time from the second extension determination point, arrives. Such additional extension determination may be repeated until it is determined not to extend the ice-making time. For convenience of explanation, the time extended by adding a second extension time to the first ice-making time is referred to as the 'second extended ice-making time' below.

However, as described above, if the extension determination is endlessly repeated until the extension determination unit (13) determines that the ice-making time will no longer be extended, there could be an issue where the ice-making time is extended indefinitely if the terminal part temperature of the evaporator does not drop below the reference temperature due to a problem with the ice maker. To prevent this issue, the extension control unit (10) according to the present embodiment may include an extension decision count unit (15) for counting the number of extension decisions, and an abnormality determination unit (17) for determining whether there is a malfunction in the ice maker.

The extension decision count unit (15) can either count the number of extension decisions made by the extension determination unit (13) or calculate the total extended time based on the extensions determined by the extension determination unit (13). The abnormality determination unit (17) can then assess whether there is a malfunction in the evaporator based on the number of extension decisions counted by the extension decision count unit (15) or the total extended time calculated.

If the abnormality determination unit (17) determines that an abnormality has occurred in the evaporator, it can generate an abnormality signal and provide it to the extension determination unit (13) and a separate notification unit. Upon receiving an abnormal signal, the extension determination unit (13) stops any further extension decisions, regardless of the result, and the notification unit, upon receiving the abnormal signal, can alert a user to the malfunction of the evaporator using means such as light or sound.

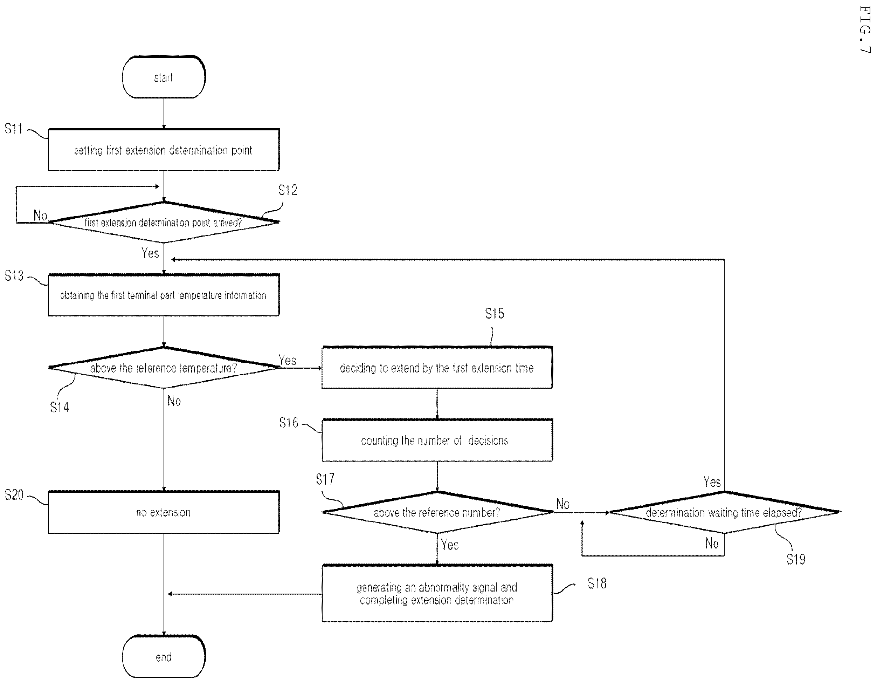

FIG. 7 is a flowchart illustrating a process for determining whether to extend the ice-making time according to an embodiment of the present disclosure in more detail.

Hereinafter, the process for determining whether to extend the ice-making time will be described in more detail with reference to FIG. 7.

When the ice-making time setting unit (7) sets the ice-making time, the determination point setting unit (11) can set the first extension determination point based on the set ice-making time (S11). When the determination point setting unit (11) sets the first extension determination point, the extension determination unit (13) can determine whether the set first extension determination point has arrived (S12). If the first extension determination point has not arrived (S12-N), the extension determination unit (13) will wait until the first extension determination point has arrived, and once the first extension determination point arrives (S12-Y), it can request the terminal temperature sensor (5) and obtain the first terminal part temperature information (S13).

The extension determination unit (13) that has acquired the first terminal part temperature can determine whether the first terminal part temperature is equal to or higher than the reference temperature (S14). If the first terminal part temperature is less than the reference temperature (S14-N), the extension determination unit (13) can terminate the determination without a decision about extending the ice-making time (S20).

On the other hand, if the first terminal part temperature is equal to or higher than the reference temperature (S14-Y), the extension determination unit (13) can decide to extend the ice-making time by the first extension time (S15).

When the ice-making time extension is determined, the extension decision count unit (15) counts the number of decisions for the ice-making time extension, generates information about extension decision count, and can provide the generated extension decision count information to the abnormality determination unit (17) and the extension determination unit (13) (S16). The abnormality determination unit (17) and the extension determination unit (13) that have acquired the extension decision count information can determine whether the number of extension decisions is greater than or equal to the reference number (S17).

If the number of extension decisions is greater than or equal to the reference number (S17), the abnormality determination unit (17) generates an abnormality signal, and the extension determination unit (13) may not make an additional extension determination (S18).

On the other hand, if the number of extension decisions is less than the reference number (S17-N), the abnormality determination unit (17) does not generate an abnormality signal, and the extension determination unit (13) can determine whether the first determination waiting time has elapsed (S19). If the first determination waiting time has not elapsed (S19-N), the extension determination unit (13) waits until the first determination waiting time elapses, and if the first determination waiting time elapses (S19-Y), the extension determination unit (13) can obtain the second terminal part temperature by requesting the terminal part temperature sensor (5) (S13). The extension determination unit (13) that has obtained the second terminal part temperature can determine whether the obtained second terminal part temperature is equal to or higher than the reference temperature (S14). If the second terminal part temperature is equal to or higher than the reference temperature (S14-Y), the extension determination unit (13) can decide to extend the first extended ice-making time by the second extension time (S15).

In this way, the abnormality determination unit (17) can repeat the extension determination until the obtained terminal part temperature is less than the reference temperature or the number of extension decisions is equal to or higher than the reference number.

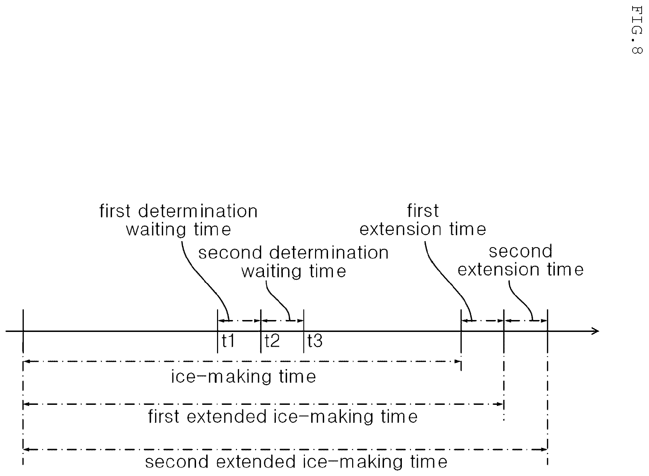

FIG. 8 is a drawing illustrating an example of extending the ice-making time multiple times according to an embodiment of the present disclosure.

Hereinafter, an example of extending the ice-making time multiple times will be examined with reference to FIG. 8.

When the first extension determination point (t1) set by the determination point setting unit (11) arrives, the extension determination unit (13) can determine whether to extend the ice-making time based on the first terminal part temperature. At this time, if it is determined to extend the ice-making time, the extension determination unit (13) can determine whether to extend the first extended ice-making time based on the second terminal part temperature at the second extension determination point (t2), which is a time point after the first determination waiting time from the first extension determination point (t1). If it is decided to extend the first extended ice-making time, the extension determination unit (13) can determine whether to extend the second extended ice-making time based on the third terminal part temperature at the third extension determination point (t3), which is a time point after the second determination waiting time from the second extension determination point (t2). If it is decided not to extend the second extended ice-making time, the extension determination unit (13) can terminate its determination.

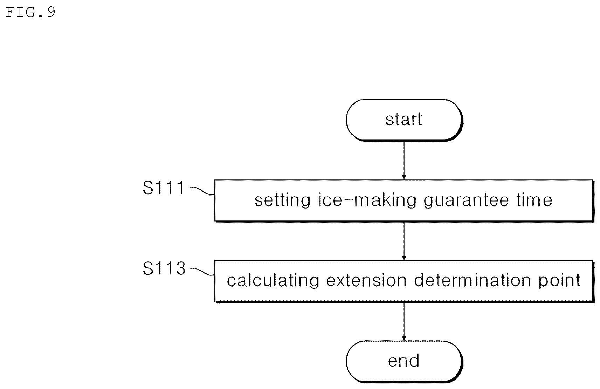

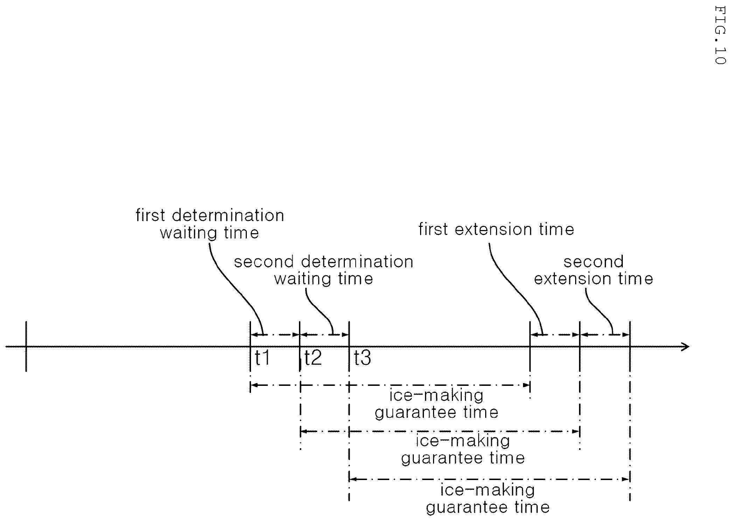

FIG. 9 is a flowchart illustrating a process for setting a first extension determination point according to an embodiment of the present disclosure, and FIG. 10 is a diagram illustrating an example in which an ice-making time is guaranteed at a terminal part according to an extension of an ice-making time according to an embodiment of the present disclosure.

As described above, the determination point setting unit (11) can set the first extension determination point based on the ice-making time set by the ice-making time setting unit (7). In this way, the determination of the first extension determination point based on the ice-making time has the advantage of allowing the first extension determination point to be set through a relatively simple calculation, but it also has the limitation of low precision. If the first extension determination point is set too early, the first terminal part temperature may be measured high even though the cooling time difference between the starting part and the terminal part of the evaporator is not large, leading to an unnecessary decision to extend the ice-making time. On the other hand, if the first extension determination point is set too late, even though the cooling time difference between the starting part and the terminal part of the evaporator is large and an ice-making time extension is necessary, terminal part temperature may be measured low, leading to a decision not to extend the ice-making time.

In order to overcome this limitation, the determination point setting unit (11) can precisely set the first extension determination point by considering the required ice-making guarantee time for the terminal part ice-making finger of the evaporator to produce the desired size of ice.

With reference to FIG. 9, to look more closely at the process of setting the first extension determination point considering the ice-making guarantee time of the determination point setting unit (11), first, the determination point setting unit (11) can set the required ice-making guarantee time for the ice-making finger of the evaporator to produce the desired size of ice (S111).

Specifically, the determination point setting unit (11) can set the required ice-making guarantee time for the desired size of ice to be generated at the terminal part of the evaporator under conditions below the reference temperature based on the temperature around the evaporator or the water temperature of the ice-making tank. At this time, the ice-making guarantee time may be a value preset by the manager.

The determination point setting unit (11) that sets the ice-making guarantee time can calculate the first extension determination point based on the set ice-making guarantee time (S113). Specifically, the determination point setting unit (11) can calculate the first extension determination point as the time before the ice-making guarantee time from the ice-making end time, which is initially set by the ice-making time setting unit (7).

In this way, by setting the first extension determination point to the time before the ice-making guarantee time from the ice-making end time, the first extension determination point can be precisely set according to the ice-making guarantee time. Therefore, the present disclosure can prevent the first extension determination point from being set too early and unnecessarily extending the ice-making time, and if it is determined not to extend the ice-making time at the first extension determination point, the time from the first extension determination point to the ice-making end time corresponds to the ice-making guarantee time, so the desired size of ice can be generated even on the ice-making finger at the terminal part of the evaporator during the remaining time.

Preferably, the first extension time, the second extension time, ... n-th extension time can be the same, and the first determination waiting time, the second determination waiting time, ... n-th determination waiting time can be the same. In addition, the extension time and the determination waiting time can be the same as each other. That is, the extension determination unit (13) can determine whether to extend the time again after the same duration as the extended time following an extension decision. Therefore, as shown in FIG. 10, the ice-making guarantee time can be ensured regardless of the number of extension determinations or the number of extension decisions.

The above description is merely an exemplary explanation of the technical concept of the present disclosure, and a person skilled in the art to which the disclosure pertains would be able to make various modifications and alterations without departing from the essential characteristics of the disclosure. Therefore, the embodiments disclosed in the present disclosure are provided for illustrative purposes and are not intended to limit the scope of the disclosure. The scope of the present disclosure should be interpreted based on the claims below, and all technical ideas within the equivalent range of these claims should be considered to fall within the scope of the present disclosure.

## Claims

1. An ice-making control method including:
initiating ice-making on a plurality of ice-making fingers by flowing refrigerant in an evaporator which has the plurality of ice-making fingers spaced apart in a longitudinal direction;
after the initiating of the ice-making, acquiring terminal part temperature information of the evaporator at a first extension determination point;
determining whether to extend a set ice-making time based on the terminal part temperature information; and
when it is determined to extend the ice-making time, extending the ice-making time by a first extension time and making ice during the extended ice-making time.

2. The ice-making control method according to claim 1,
in the ice-making control method, determining whether to extend the ice-making time based on whether the terminal part temperature information measured at the first extension determination point is equal to or higher than a reference temperature.

3. The ice-making control method according to claim 2, further comprising:
setting the first extension determination point based on the ice-making time.

4. The ice-making control method according to claim 3, wherein the setting of the first extension determination point comprising:
determining an ice-making guarantee time required to produce target sized ice; and
setting the first extension determination point to time before the ice-making guarantee time from an end time of the ice-making time.

5. The ice-making control method according to claim 4,
further comprising, when extending the ice-making time, determining whether to extend the extended ice-making time based on the terminal part temperature acquired at a second extension determination point, and
wherein, when it is determined to extend the extended ice-making time, extending the extended ice-making time by a second extension time.

6. The ice-making control method according to claim 5, further comprising:
determining whether the evaporator is abnormal based on a number of determined extensions of the ice-making time or total extended time.
